(19) Europäisches Patentamt
European Patent Office
Office européen des brevets

(11) Veröffentlichungsnummer: **0 039 822**
**A1**

# (12) EUROPÄISCHE PATENTANMELDUNG

(21) Anmeldenummer: **81103186.3**

(22) Anmeldetag: **28.04.81**

(51) Int. Cl.³: **B 23 Q 5/28**

(30) Priorität: **14.05.80 DE 3018520**

(43) Veröffentlichungstag der Anmeldung:
**18.11.81 Patentblatt 81/46**

(84) Benannte Vertragsstaaten:
**AT CH FR GB IT LI**

(71) Anmelder: **Friedrich Deckel Aktiengesellschaft**
**Plinganserstrasse 150**
**D-8000 München 70(DE)**

(72) Erfinder: **Kagerer, Franz**
**Ludwig-Braille-Strasse 6**
**D-8000 München 70(DE)**

## (54) Antriebseinrichtung für eine Vorschub-Gewindespindel.

(57) Antriebseinrichtung für eine Vorschub-Gewindespindel für Werkzeugmaschinen oder dergleichen, wobei die Gewindespindel sowohl von einem Antriebsmotor als auch von einem durch axiale Verschiebung einkuppelbaren Handrad antreibbar ist. Dabei wird durch die Einkuppelbewegung des Handrades die Antriebsverbindung zwischen Antriebsmotor und Gewindespindel gelöst, so daß der Motor einerseits nicht mitbewegt werden muß und andererseits bei unbeabsichtigtem Anlaufen die Gewindespindel nicht antreiben kann.

72 70 68 62 60 64 66

FIG.4

EP 0 039 822 A1

Antriebseinrichtung für eine Vorschub-Gewindespindel

Die Erfindung betrifft eine Antriebseinrichtung der im Gattungsbegriff des Anspruches 1 genannten Art.

Bei manchen Werkzeugmaschinen besteht die Forderung, daß ihre Einricht- und/oder Vorschubbewegungen sowohl von Hand als auch motorisch durchführbar sein sollen. Das Handrad wird im allgemeinen erst eingekuppelt, wenn es betätigt wird; während des Motorbetriebes ist es aus Sicherheitsgründen ausgekuppelt.

Während des Handbetriebes müssen außer den unvermeidlichen, auf die Gewindespindel wirkenden Vorschubkräften auch noch die Massenkräfte des mit der Gewindespindel verbundenen motorischen Antriebs überwunden werden. Vor allem der Antriebsmotor selbst mit seiner relativ großen Schwungmasse behindert ein genaues Einrichten ganz erheblich.

Es ist deshalb die Aufgabe der Erfindung, eine Einrichtung der gattungsgemäßen Art derart zu verbessern, daß der motorische Antrieb während des Handbetriebes auf einfache, Bedienungsfehler ausschließende Weise von der Gewindespindel abgekuppelt wird.

Diese Aufgabe ist erfindungsgemäß durch die im Kennzeichen des Anspruches 1 enthaltenen Merkmale gelöst.

Die Kupplungseinrichtung zwischen Antriebsmotor und Gewindespindel ist im allgemeinen eingekuppelt, d. h. diese beiden Bauelemente sind miteinander verbunden. Gleichzeitig ist das Handrad ausgekuppelt. In diesem Betriebszustand ist die Maschine für motorischen Vorschubantrieb eingerichtet, wie er

0039822

z. B. bei gesteuertem Betrieb gegeben ist.

Kuppelt die Bedienungsperson das Handrad durch axiale Verschiebung auf der Handradwelle ein, so wird zwangsläufig der motorische Antrieb ausgekuppelt, so daß bei Handbetrieb dieser nicht mitbewegt zu werden braucht. Ein versehentliches Mitlaufen des Handrades bei Motorbetrieb ist ausgeschlossen.

Die technische Einrichtung, welche bei Einkuppeln des Handrades ein Auskuppeln des Motorantriebes bewirkt, kann auf unterschiedliche Weise verwirklicht werden. Sie kann z. B. mechanisch, elektromechanisch, elektropneumatisch o. dgl. sein.

In einer bevorzugten Ausgestaltung der Erfindung ist die Kupplungseinrichtung mit dem Handrad durch ein mechanisches Gestänge o. dgl. verbunden. Eine derartige Ausbildung ist baulich sehr einfach und preiswert und gewährt eine besonders hohe Ausfallsicherheit.

Dabei ist erfindungsgemäß vorgesehen, daß der Antriebsmotor sowie die Kupplungseinrichtung an einem Ende der Gewindespindel, das Handrad am anderen Ende der Gewindespindel angeordnet sind, so daß sich beide Antriebe baulich nicht behindern. Beide Antriebe sind jeweils mit dem Ende der Gewindespindel antriebsverbunden, dem sie räumlich zugeordnet sind, so daß sowohl bei Hand- als auch bei Motorbetrieb die kürzestmöglichen Kraftwege und damit geringe Elastizitätseinflüsse gegeben sind. Das Handrad ist beispielsweise mit einer parallel zur Gewindespindel angeordneten, längsverschieblich gelagerten Steuerstange verbunden, welche ihrerseits mit der Kupplungseinrichtung zwischen Antriebsmotor und Gewindespindel in Wirkverbindung steht.

Weitere Merkmale und Vorteile dieser Ausführung ergeben sich aus den Ansprüchen, der Zeichnung sowie der Zeichnungsbeschreibung.

In einer anderen Ausgestaltung ist vorgesehen, daß die Kupplungseinrichtung zwischen Antriebsmotor und Gewindespindel durch einen Servoantrieb betätigt wird, der durch einen mit dem Handrad direkt oder indirekt verbundenen Steuerschalter o. dgl. gesteuert wird. Eine derartige Ausführung bietet vor allem dann Vorteile, wenn aus Platzgründen eine rein mechanische Betätigungseinrichtung nicht oder nur schwer möglich ist. Der Servoantrieb kann z. B. ein elektromagnetischer, hydraulischer oder pneumatischer Antrieb sein.

Mehrere Ausführungsbeispiele der Erfindung sind in der Zeichnung dargestellt und im folgenden näher beschrieben. Es zeigen:

Fig. 1 eine schematische Darstellung einer Antriebseinrichtung mit mechanischem Gestänge für die Betätigung der Motorkupplung;

Fig. 2 eine Darstellung gemäß Fig. 1 mit eingekuppeltem Handrad und ausgekuppeltem Motor;

Fig. 3 eine schematische Darstellung etwa gemäß Fig. 1, jedoch mit einer anderen Ausführung der Motorkupplung;

Fig. 4 eine schematische Darstellung einer Antriebseinrichtung mit elektrisch betätigter Motorkupplung.

---

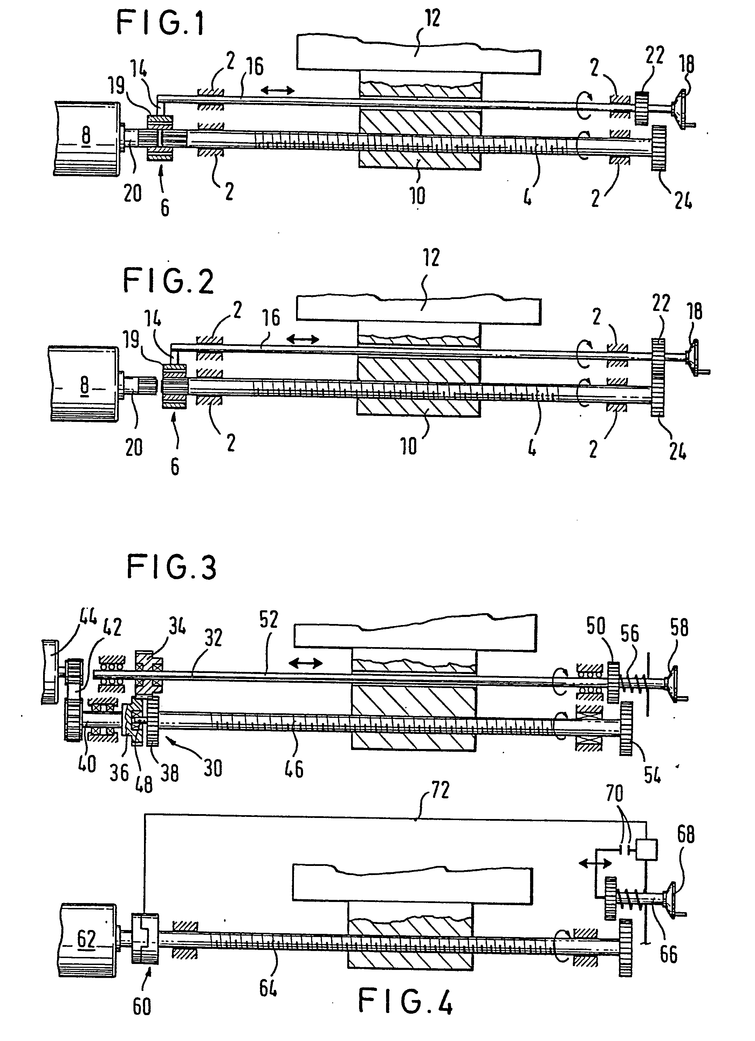

Die in den Figuren 1 und 2 dargestellte Antriebseinrichtung umfaßt im wesentlichen eine im Maschinengestell 2 drehbar, aber axial unverschiebbar gelagerte Gewindespindel 4, die über eine Kupplungseinrichtung 6 mit einem Antriebsmotor 8 kuppelbar ist. Die Gewindespindel 4 dient zur Verschiebung einer Spindelmutter 10, die mit einem Maschinenschlitten 12 o. dgl. verbunden ist.

0039822

Die Kupplungseinrichtung 6 ist über ein mechanisches Gestänge 14, 16 mit einem Handrad 18 verbunden. Das mechanische Gestänge umfaßt eine ebenfalls im Maschinengestell 2 drehbar und längsverschieblich gelagerte Steuerstange 16, auf welcher an ihrem einen, in der Zeichnung rechten Ende das Handrad fest angeordnet ist. Das andere Ende der Steuerstange 16 ist mit der verschiebbaren Kupplungshülse 19 verbunden. Diese kann durch die Steuerstange in zwei Stellungen verschoben werden, nämlich die in Fig. 1 dargestellte Stellung, in der sie die Welle 20 des Antriebsmotors 8 mit der Gewindespindel 4 verbindet, sowie die in Fig. 2 gezeigte Stellung, in der die Welle 20 von der Gewindespindel 4 abgekuppelt ist.

Im Bereich des handradseitigen Endes der Steuerstange 16 ist ein Zahnrad 22 angeordnet, welches in der nach rechts verschobenen Stellung der Steuerstange 16 mit einem auf der Gewindespindel 4 fest angeordneten Zahnrad 24 in Eingriff ist (Fig. 2). In dieser Stellung ist die Antriebseinrichtung für Handbetrieb eingerichtet; der Antriebsmotor 8 ist abgekuppelt. Wird das Handrad - z. B. durch eine Feder - nach links verschoben, so wird der Antriebsmotor mittels der Kupplungseinrichtung 6 wieder mit der Gewindespindel 4 verbunden, während das Handrad 18 abgekuppelt ist.

Fig. 3 zeigt ein anderes Ausführungsbeispiel für eine Kupplungseinrichtung 30. Auf der drehbaren und verschiebbaren Steuerstange 32 ist ein Zahnrad 34 drehbar und axial unverschiebbar angeordnet. In der dargestellten Stellung der Steuerstange 32 kämmt dieses Zahnrad 34 mit zwei Zahnrädern 36, 38 gleicher Teilung. Das Zahnrad 36 ist über die Welle 40 und den Zahnriemen 42 mit dem Antriebsmotor 44 verbunden, das Zahnrad 38 mit der Gewindespindel 46. (Die Gewindespindel ist mit ihrem Zapfenfortsatz 48 im Zahnrad 36 drehbar gelagert). In der dargestellten Stellung kuppelt das Zahnrad 34 die beiden

0039822

Zahnräder 36 und 38 miteinander, so daß die Antriebseinrichtung für Motorbetrieb eingerichtet ist. Das handradseitige Zahnrad 50 auf der Steuerstange 52 greift in das Zahnrad 54 der Gewindespindel 46 nicht ein.

Wird die Steuerstange 52 gegen die Kraft der Rückstellfeder 56 nach rechts verschoben, so gelangen die Zahnräder 50 und 54 in Eingriff, während das Zahnrad 34 außer Eingriff mit dem Zahnrad 36 kommt. In dieser Stellung ist die Antriebseinrichtung für den Betrieb mittels des Handrades 58 eingerichtet. Da das Zahnrad 34 drehbar auf der Steuerstange gelagert ist, werden unterschiedliche Drehzahlen zwischen dem Zahnrad 34 und der Steuerstange, z. B. infolge einer entsprechenden Übersetzung der Zahnräder 50, 54 ohne weiteres möglich.

Fig. 4 zeigt eine Anordnung, bei der die Kupplungseinrichtung 60 zwischen Antriebsmotor 62 und Gewindespindel 64 als Elektromagnetkupplung ausgebildet ist. Diese wird bei einer Verschiebung des auf der Welle 66 fest angeordneten Handrades 68 nach rechts, bei der die beiden Kontakte 70 miteinander in Berührung kommen, über die Steuerleitung 72 gelöst, so daß auch bei dieser Anordnung stets entweder der Antriebsmotor 62 oder das Handrad 68 mit der Gewindespindel gekuppelt ist.

0039822

## Patentansprüche:

1. Antriebseinrichtung für eine Vorschub-Gewindespindel für Werkzeugmaschinen o.dgl., umfassend einen mit der Gewindespindel drehverbundenen Antriebsmotor sowie ein mit der Gewindespindel durch axiale Verschiebung desselben kuppelbares Handrad,

dadurch gekennzeichnet,

daß zwischen Antriebsmotor (8, 44, 62) und Gewindespindel (4, 46, 64) eine Kupplungseinrichtung (6, 30, 60) angeordnet ist, welche über das axial verschiebbare Handrad (18, 58, 68) betätigbar ist derart, daß bei Einkuppeln des Handrades (18, 58, 68) die Verbindung zwischen Antriebsmotor (8, 44, 62) und Gewindespindel (4, 46, 64) gelöst wird.

2. Antriebseinrichtung nach Anspruch 1, dadurch gekennzeichnet, daß die Kupplungseinrichtung (6, 30) für den Antriebsmotor (8, 44) mit dem Handrad (18, 58) durch ein mechanisches Gestänge (14, 16; 52) o. dgl. verbunden ist.

3. Antriebseinrichtung nach einem der Ansprüche 1 oder 2, dadurch gekennzeichnet, daß der Antriebsmotor (8, 44) sowie die Kupplungseinrichtung (6, 30) an einem Ende der Gewindespindel (4, 46), das Handrad (18, 58) am anderen Ende der Gewindespindel (4, 46) angeordnet sind und daß das Handrad (18, 58) mit einer parallel zur Gewindespindel (4, 46) angeordneten, längsverschieblich gelagerten Steuerstange (16, 52) verbunden ist, welche ihrerseits mit der Kupplungseinrichtung (6, 52) in Wirkverbindung steht.

0039822

4. Antriebseinrichtung nach Anspruch 3, dadurch gekennzeichnet, daß das Handrad (18, 58) auf der drehbar gelagerten Steuerstange (16, 52) fest angeordnet ist, daß die Steuerstange handradseitig ein Zahnrad (22, 50) trägt, welches durch Längsverschieben der Steuerstange (16, 52) mit einem auf der Gewindespindel (4, 46) sitzenden Zahnrad (24, 54) kuppelbar ist, und daß die Steuerstange (16, 52) antriebsmotorseitig ein bewegliches Kupplungsteil (19, 34) trägt, welches bei der genannten Verschiebung den Antriebsmotor (8, 44) von der Gewindespindel (4, 46) trennt.

5. Antriebseinrichtung nach einem der Ansprüche 3 oder 4, dadurch gekennzeichnet, daß die Kupplungseinrichtung (30) zwischen Antriebsmotor (44) und Gewindespindel (46) je ein auf den einander zugewandten koaxialen Enden der mit dem Motor verbundenen Welle (40) und der Gewindespindel (46) angeordnetes Zahnritzel (36 bzw. 38) mit gleicher Zahnteilung umfaßt sowie ein auf der Steuerstange (52) drehbar gelagertes, mit beiden Zahnritzeln (36, 38) in Eingriff befindliches Zahnrad (34), welches durch Längsverschieben der Steuerstange (52) außer Eingriff mit einem der beiden Zahnritzel (36) kommt.

6. Antriebseinrichtung nach einem der Ansprüche 3 bis 5, dadurch gekennzeichnet, daß die Längsverschiebung der Steuerstange (16, 52) gegen die Kraft einer Feder (56) erfolgt.

7. Antriebseinrichtung nach Anspruch 1, dadurch gekennzeichnet, daß die Kupplungseinrichtung (60) zwischen Antriebsmotor (62) und Gewindespindel (64) durch einen Servoantrieb betätigt wird, der durch einen mit dem Handrad (68) direkt oder indirekt verbundenen Steuerschalter (70) o. dgl. gesteuert wird.

0039822

FIG.1
12
2
16
14
19
8
20
6
2
10
4
2
22
18
24
FIG.2
12
2
16
14
19
8
20
6
2
10
4
2
22
18
24
FIG.3

44
42
34
52
32
50
56
58
40
36
48
38
30
46
54
72
70
68
62
60
64
66
FIG.4

Europäisches Patentamt

# EUROPÄISCHER RECHERCHENBERICHT

0039822

EP 81103186.3

| EINSCHLÄGIGE DOKUMENTE | | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| A | DE - A - 1 427 068 (KEARNEY & TRECKER) ---- | | B 23 Q 5/28 |

RECHERCHIERTE SACHGEBIETE (Int. Cl.³)

B 23 Q 5/00
B 23 Q 1/00
B 23 B 21/00
F 16 H 25/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 22-07-1981 | KIENAST |